Europäisches Patentamt

European Patent Office

Office européen des brevets

(11) Publication number: **0 366 356**
**A2**

## (12) EUROPEAN PATENT APPLICATION

(21) Application number: 89310754.0

(51) Int. Cl.5: **B29D 11/00 , B23K 26/00**

(22) Date of filing: 19.10.89

(30) Priority: 25.10.88 IE 3230/88

(43) Date of publication of application:
02.05.90 Bulletin 90/18

(84) Designated Contracting States:
AT DE ES FR GB IT SE

(71) Applicant: BAUSCH & LOMB BERMUDA
TECHNOLOGY LTD
Gibbons Building P.O. Box 1154
Hamilton 5(BM)

(72) Inventor: Lunney, James Gerard
113 Carrigwood Firwood
Dublin 24(IE)

(74) Representative: Allam, Peter Clerk et al
LLOYD WISE, TREGEAR & CO. Norman
House 105-109 Strand
London WC2R 0AE(GB)

(54) Laser profiling of lenses.

(57) A curved edge on a lens is formed by directing a laser beam onto the lens adjacent its edge and causing relative movement between the laser beam and contact lens whereby a curved surface is formed on the edge of the lens by the removal of material therefrom through ablative photodecomposition.

EP 0 366 356 A2

# LASER PROFILING OF LENSES

The present invention relates to an apparatus and method for producing a curved or rounded edge on a lens, in particular a contact lens.

According to one aspect of the invention there is provided a method for forming a curved edge on a lens comprising the steps of, directing a laser beam onto one face of a lens adjacent to the edge of the lens, and causing relative movement between the laser beam and contact lens, to enable the circumference of the lens to trace out a path in the form of an arc through the laser beam, said path extending around the edge of the lens between the front and rear faces of the lens, whereby a curved surface is formed on the edge of the lens by removing material from the lens through ablative photo-decomposition.

In a preferred form of the invention the laser is held stationary and the lens is pivotted, in intermittent angular steps, about an axis spaced apart from the edge of the lens and substantially perpendicular to the laser beam.

Further preferably, the lens is rotated about a notional central axis substantially parallel to the laser beam, at each angular pivot step, such that the circumference of the lens is brought into the path of the laser beam.

The lens is preferably a polymer type contact lens.

According to a second aspect of the present invention there is provided an apparatus for carrying out the method according to said one aspect of the invention comprising, first means for supporting a lens and rotating the lens about its own central axis, and second means for causing movement of said first means to enable the circumference of the lens to trace out a path in the form of an arc through a laser beam.

The first and second means preferable comprises respective first and second electric motors with said first electric motor being mounted on a support arm which is rotatable by said second electric motor.

The lens is preferably mounted on an output shaft of said first electric motor.

According to a third aspect of the present invention there is provided a method for forming a curved edge on a lens comprising the steps of providing an aperture in a template, said aperture increasing in width in a radial direction away from a notional centre point, locating said aperture in a path between said lens and a laser beam, in a position such that the greatest width of said aperture corresponds with the circumference of the lens, and rotating the lens such that successive circumferential regions of the lens are exposed by the aperture, and ablative photo-decomposition of the circumferential region of the lens occurs to produce a curved edge.

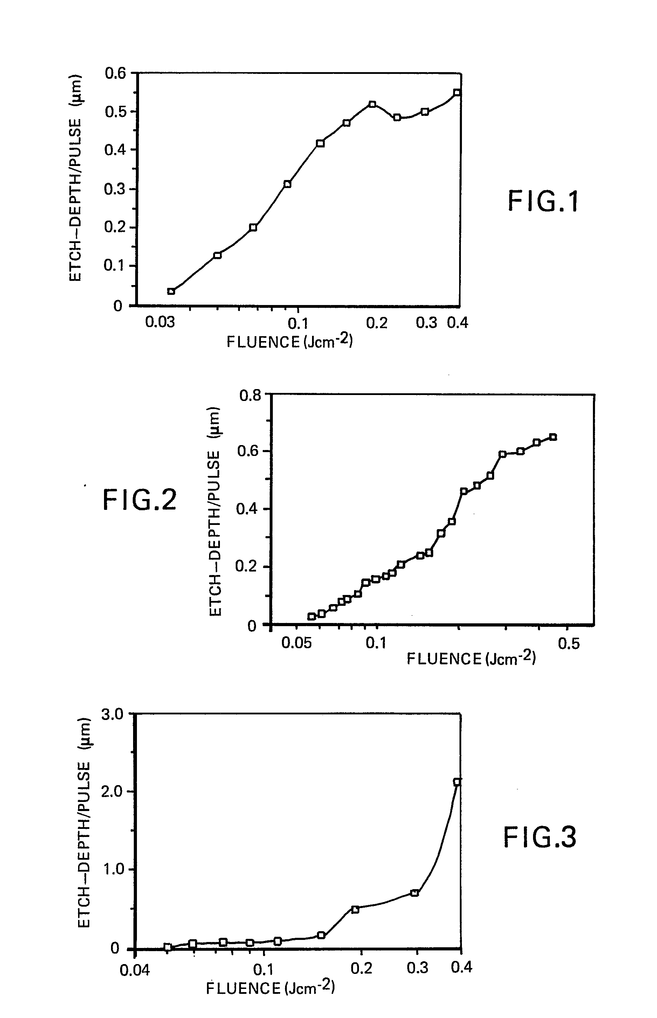

In order to quantitively investigate the ablative photo-decomposition of contact lenses through laser irradiation, it was necessary to measure the etching characteristic of the lens material. The etch depth per pulse as a function of laser fluence was measured for perspex (PMMA) and Contex at 193nm and for Contex at 248nm using a Lambda Physik 102 MSC Excimer laser. The etch depth per pulse was measured by imaging an aperture onto a sample and measuring the depth of the etch pit produced by a known number of laser shots. Figure 1, shows the etch curve for perspex at 193nm, and is similar to the curve obtained by Sutcliffe and Srinivasan (Journal of Applied Physics (60), 3315, (1986)). The etch curve for Contex at 193nm is shown in Figure 2 and is similar to that obtained for perspex. The measurements indicate a threshold for etching at about $0.05 JCM^{-2}$, rising to $0.7\mu m$ per pulse at $0.4 JCM^{-2}$. An etch curve for Contex was also measured at 248nm, and is shown in Figure 3. This curve shows that the etch depth per pulse reaches a value of $2\mu m$ per pulse at $0.4 JCM^{-2}$, this higher value probably being due to a lower value of the absorbtion coefficient at 248nm as compared to 193nm. Inspection of the irradiated Contex surface showed that there is visible evidence of melting for the etching at 248nm.

Embodiments of the invention will now be described, by way of example, with reference to the accompanying drawings, in which;

Figures 1 to 3 are etch curves for perspex and Contex previously described;

Figure 4 is a schematic view of an apparatus according to the second aspect of the invention;

Figure 5 is a schematic illustration of a lens edge undergoing laser irradiation according to the first aspect of the invention;

Figure 6 is a schematic illustration of an arrangement of carrying out the method according to the third aspect of the invention;

Figure 7 is a front view of the of the lens in the arrangement of Figure 3;

Figure 8 is a scanning electron microscope photograph showing a curved edge etched on a sheet of perspex;

Figure 9 is a scanning electron microscope of a curved edge etched on a Contex contact lens;

Figure 10 is a scanning electron microscope photograph of a cross-section of an edge etched on a perspec contact lens; and

Figures 12 and 13 are scanning electron microscope photographs of edges etched on Contex contact lenses.

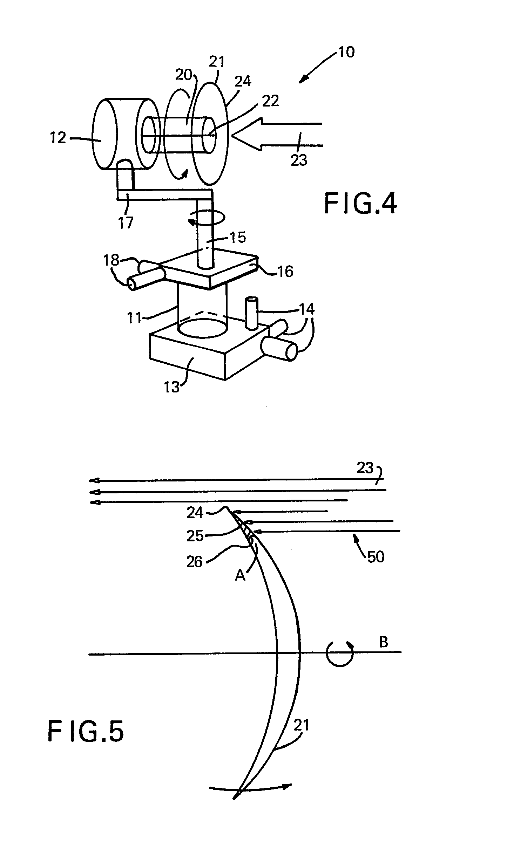

Referring now to Figure 4, there is shown an apparatus 10 for producing a curved edge on a lens according to the invention. The apparatus 10 comprises first and second electric motors 11, 12 respectively, the first electric motor 11 being mounted on a conventional first translator or "translation stage" 13 as known in the art. The first translation stage 13 has X, Y and Z direction micrometer drives 14 for effecting movement of the first electric motor 11 to adjust its position. The electric motor 11 has an output drive shaft (not shown) which is fixed to the bottom surface of a second conventional translation stage 16. The second electric motor 12 is mounted on the second translation stage 16 by support arms 15, 17. The second translation stage 16 also has X and Y direction micrometer drives 18.

The second electric motor 12 has an output drive shaft 20 and a contact lens 21 is secured to the free end 22 of the drive shaft 20 in a vertical plane as shown. A laser beam 23 is directed at the edge 24 of the contact lens 21. The laser beam 23 is generated by a Lambda Physik 102 MSC excimer laser (not shown).

The lower micrometer drives 14 are used to position the rotation axis of electric motor 11 at an appropriate distance from the edge 50 of the laser beam 23. The rotation axis of electric motor 11 is a vertical axis A as shown in Figure 5. Axis A is substantially perpendicular to the laser beam 23. The micrometer drives 18 are used to move the support arms 15, 17 and thus the electric motor 12 and contact lens 21 independently of electric motor 11, so that the laser beam edge 50 is positioned at the desired distance from the central axis B of the contact lens 21. Thus, the support arm 15 can be moved on the translation stage 16, relative to the electric motor 11, by the micrometer drives 18.

In use, the contact lens 21 is arranged at right angles to the laser beam 23 and the electric motor 11 is energised to pivot the translation stage 16 and thus the electric motor 12 and contact lens 21 through a predetermined angular step distance about the axis A (Figure 5) in a direction towards the laser beam 23. The predetermined angular step distance is a few degrees preferably in the range $1°$ to $20°$. The second electric motor 12 is then energised to rotate the contact lens 21 about its central axis B so that segments of the contact lens 21 in the region of the edge 24 are successively rotated into the path of the laser beam 23. The electric motor 11 is then again energised to pivot the contact lens 21 through a further angular step distance, about axis A in a direction towards the laser beam 23. The second electric motor 12 is then again energised to rotate the contact lens 21 about axis B to expose a new region of the lens edge 24 to the laser beam 23. This procedure is repeated until the edge 24 has been completely exposed to the laser beam. During exposure of the lens edge 24 to the laser beam 23, the material of the lens edge 24 undergoes ablative photo-decomposition thus causing the circumferential edge region 25 to be removed and the eventual final edge 26 of the lens 21 becomes curved.

It will be appreciated that operation of the electric motor 11 causes the circumferential edge 24 of the lens 21 to trace out a path in the form of an arc through the laser beam 23.

It will be appreciated that the contact lens 21 thus undergoes ablative photo-decomposition at a rate depending upon the wavelength of the laser beam 23, the fluence of the laser beam, the number of shots (pulses) of the laser beam to which the lens 21 is exposed and, of course the material of the lens 21. The distance of the axis A from the edge of the laser beam 23 will determine the radius of curvature of the eventual final edge 26 of the lens 21.

In another embodiment of the invention the contact lens 21 could be rotated in a continuous manner about both the axis A and the axis B for a sufficient period of time to enable the edge 24 to become curved.

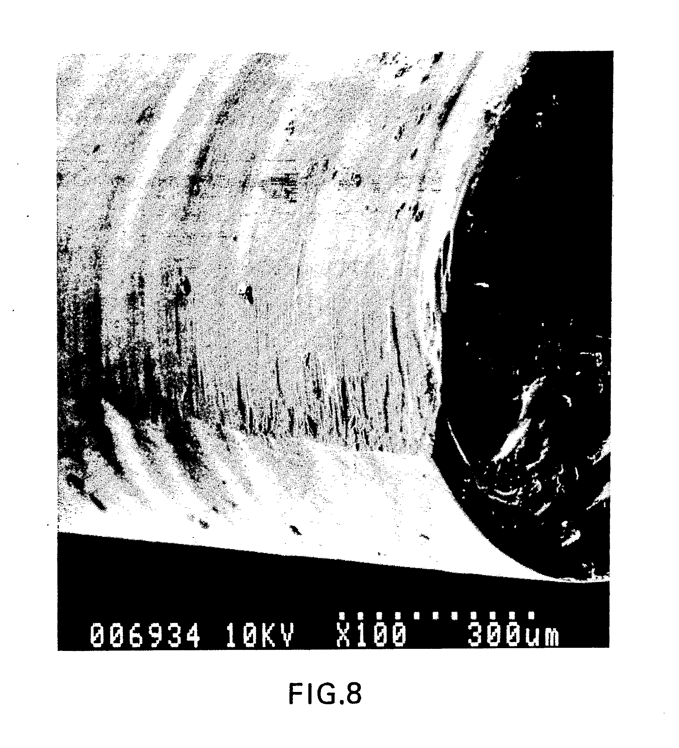

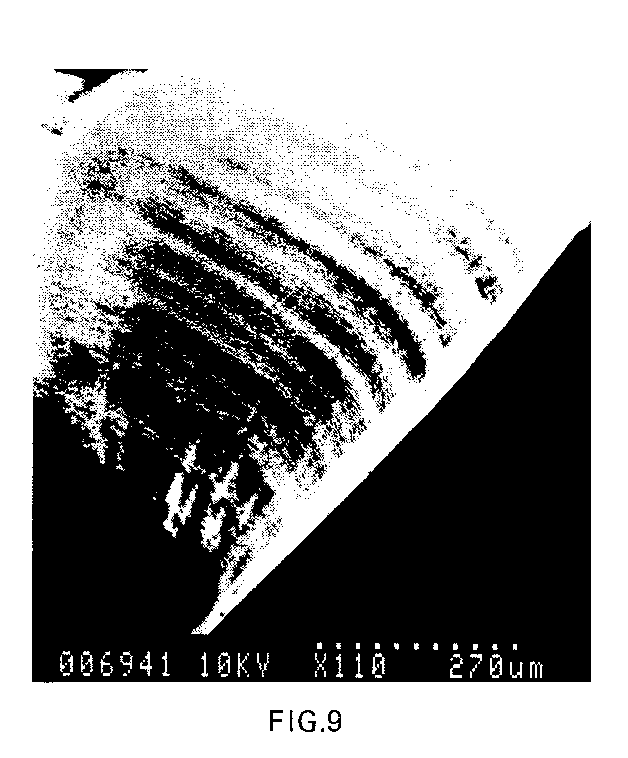

Figure 8 is a scanning electron microscope (SEM) photograph showing an edge etched on a 1mm thick sheet of perspex using a total of 3360 shots at a laser wavelength of 193nm, and a fluence value of $0.25JCM^{-2}$. The radius of curvature of the edge is 0.5mm. Figure 9 shows a rounded edge cut at one position on a Contex contact lens using 980 shots at 193nm and $0.25JCM^{-2}$.

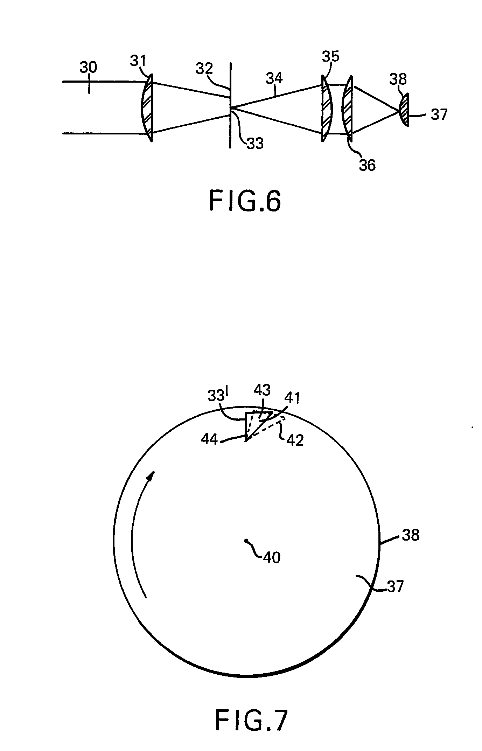

Referring now to Figures 6 and 7 the method according to the third aspect of the invention will be described. In this method, a laser beam 30 is focused by a lens 31 onto a mask 32 which has an aperture 33. The portion of the laser beam 34 which passes through the aperture 33 diverges as shown and is collimated by a lens 35. A third lens 36 focuses the laser beam 34 onto a contact lens 37 the edge 38 of which is to be irradiated to cause the edge to become curved.

In Figure 7, the image 33' of the aperture 33 is shown superimposed on the contact lens 37. The aperture 33 is generally triangular in shape, and increases in width in a radial direction away from the centre 40 of the contact lens 37. Only the region 41 of the contact lens 37 defined by the aperture 33 is exposed to the laser beam 34. The lens 31 is used to vary the fluence of the laser beam 30.

The contact lens 37 is mounted on a suitable means (not shown) so that it is rotated in predetermined angular steps about its centre 40, and thus successive circumferential regions 42 of the contact lens 37 are exposed by the aperture 33.

It will be appreciated that as the contact lens 37 is rotated, the outermost part of the lens 37 corresponding to the region 43 of the aperture 33, will be exposed to the laser beam for a greater time period than will the inner part of the lens 37 corresponding to the region 44. Thus, the outermost part of the lens 37 corresponding to the region 43 will undergo substantially more ablative photo-decomposition than will the inner part of the lens corresponding to the region 44. This differential in the exposure time causes the irradiated circumferential region of the lens to become curved, due to the radial variation in etch depth caused by ablative photo-decomposition.

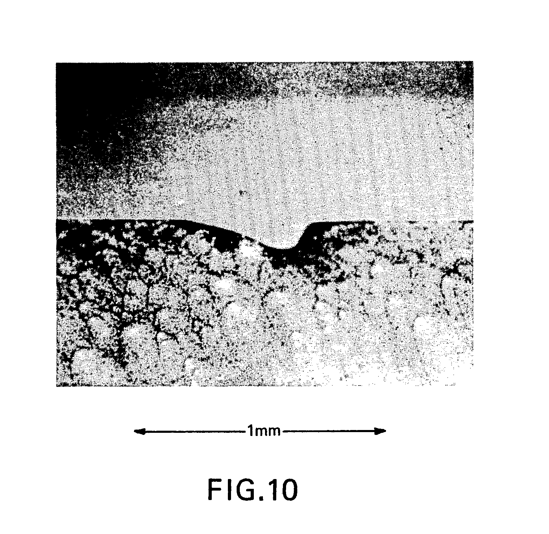

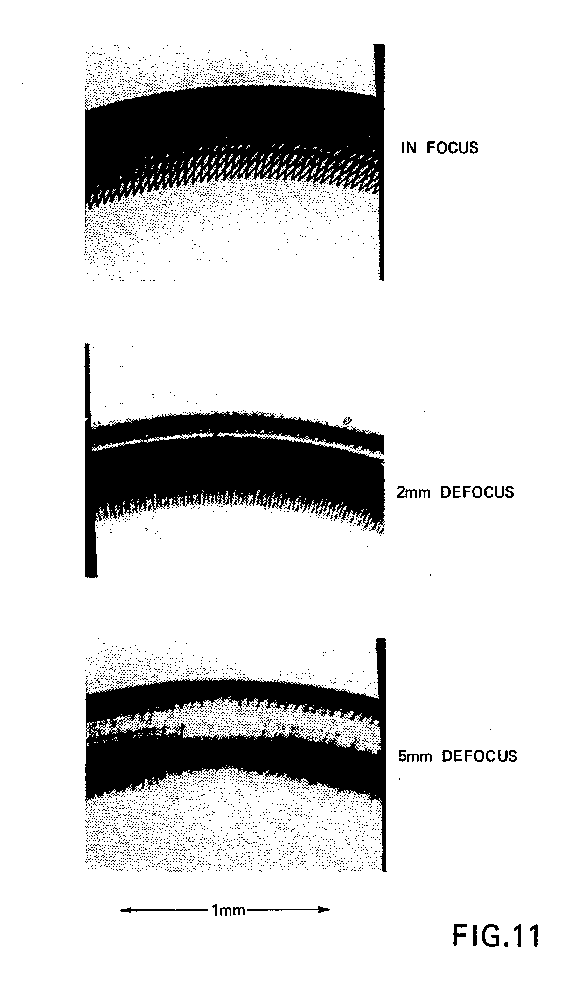

Figure 10 shows a cross-section of an edge etched onto a perspex contact lens using a Lambda Physik 102 MSC excimer laser operating at 193nm. The laser fluence was $0.2 JCM^{-2}$ and 20 shots were used at each lens position with the lens being rotated in angular steps of $0.9°$. The step size of $0.9°$ was not sufficiently small to avoid leaving an outline of the mask on the lens, but as shown in Figure 11 the outline can be partially removed by defocusing of the imaging optics.

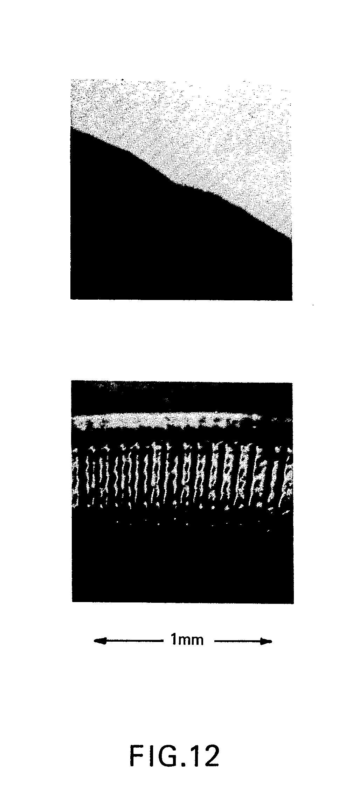

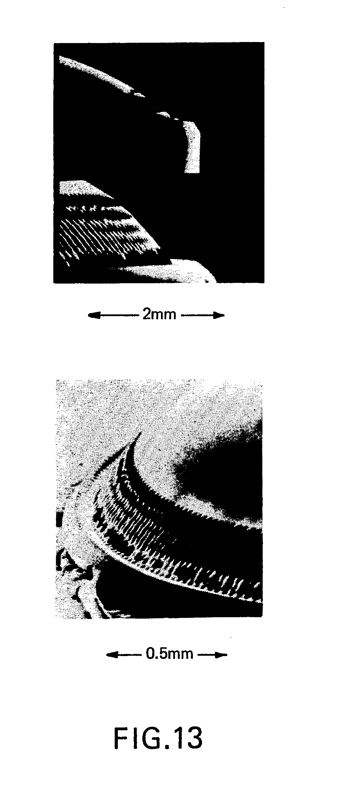

Figures 12 and 13 show scanning electron microscope photographs of edges cut in Contex contact lenses at a laser wavelength of 193nm, having a fluence value of $0.3 JCM^{-2}$, angular step size of $0.9°$ and 40 shots in each position.

## Claims

1. A method for forming a curved edge on a lens comprising the steps of, directing a laser beam onto one face of a lens adjacent to the edge of the lens, and causing relative movement between the laser beam and contact lens, to enable the circumference of the lens to trace out a path in the form of an arc through the laser beam, said path extending around the edge of the lens between the front and rear faces of the lens, whereby a curved surface is formed on the edge of the lens by removing material from the lens through ablative photo-decomposition.

2. A method as claimed in Claim 1 wherein the laser is held stationary and the lens is pivotted, in intermittent angular steps, about an axis spaced apart from the edge of the lens and substantially perpendicular to the laser beam.

3. A method as claimed in Claim 2, wherein the lens is rotated about a notional central axis substantially parallel to the laser beam, at each angular pivot step, such that the cirumference of the lens is brought into the path of the laser beam.

4. An apparatus for carrying out the method according to any preceding claim, comprising, first means for supporting a lens and rotating the lens about its own central axis, and second means for causing movement of said first means to enable the circumference of the lens to trace out a path in the form of an arc through a laser beam.

5. An apparatus as claimed in Claim 4, wherein the first and second means comprises respective first and second electric motors with said first electric motor being mounted on a support arm which is rotatable by said second electric motor.

6. A method for forming a curved edge on a lens comprising the steps of providing an aperture in a template, said aperture increasing in width in a radial direction away from a notional centre point, locating said aperture in a path between said lens and a laser beam, in a position such that the greatest width of said aperture corresponds with the circumference of the lens, and rotating the lens such that successive circumferential regions of the lens are exposed by the aperture, and ablative photo-decomposition of the circumferential region of the lens occurs to produce a curved edge.

FIG.1

FIG.2

FIG.3

FIG.4

FIG.5

FIG.6

FIG.7

006934 10KV X100 300um

FIG.8

006941 10KV X110 270um

FIG.9

←————————1mm————————→

# FIG.10

IN FOCUS

2mm DEFOCUS

5mm DEFOCUS

←———1mm———→

FIG.11

← 1mm →

FIG.12

— 2mm —

— 0.5mm —

FIG.13